# EUROPEAN PATENT APPLICATION

(11) **EP 4 345 137 A1**
(43) Date of publication of application: **03.04.2024**
(21) Application number: 21955394.8
(22) Date of filing: 31.08.2021
(51) Int. Cl.: C08L 101/00, C08L 21/00, C08L 23/00, C08L 33/10, C08L 25/04, C08L 69/00, C08L 77/00, C08K 3/36, C08K 3/10, C09D 5/03, B33Y 70/00

(54) **POLYMER COMPOSITE, PREPARATION METHOD THEREFOR AND APPLICATION THEREOF**

(71) Applicant: Wanhua Chemical Group Co., Ltd, Yantai Shandong 264000 (CN)
(72) Inventor: YANG, Jie, Chongqing Street, Economic and Technological Development Zone Yantai, Shandong 264006 (CN); LOU, Guanjun, Chongqing Street, Economic and Technological Development Zone Yantai, Shandong 264006 (CN)
(74) Representative: HGF
(86) International application number: PCT/CN2021/115611
(87) International publication number: WO 2023/028824

(57) **Abstract**

Disclosed herein are a polymer composite, a preparation method therefor and an application thereof. The polymer composite comprises the following components in parts by weight: 100 parts polymer powder, 0.1-3 parts nanoparticle A, and 0.05-1.5 parts nanoparticle B. The particle size of nanoparticle A is smaller than that of nanoparticle B, and the mass ratio of nanoparticle A to nanoparticle B is (1-9): 1.The small-particle size and large-particle size nanoparticles used in the present application are compounded in a specific ratio, and the two act synergistically as flow agents for the polymer powder, so that the polymer composite has excellent fluidity, permeability and high temperature stability.

## Description

### TECHNICAL FIELD

The present application relates to the technical field of polymer materials, in particular to a polymer composite, a preparation method therefor and an application thereof.

### BACKGROUND

Polymer material refers to a high-molecular-mass compound which is composed of many identical and simple building blocks repeatedly linked by covalent bonds. The polymer powder is a fine chemical with a certain particle size and distribution and a certain particle morphology which is prepared by the chemical method or physical method. The polymer powder is widely used in the field of powder coatings, 3D printing, cosmetics, additives and pharmaceuticals.

Although the polymer powder can be prepared by chemical synthesis method, such as suspension polymerization or emulsion polymerization, the preparation process is complex and has limitations on polymer types, and most chemical method can only prepare styrene polymers or acrylic acid (ester) polymers. At present, the main means to obtain the polymer powder is still mechanical pulverization, which has the advantage of simple process and continuous production, but the shape of prepared particles is disordered and the particle size distribution is also wide.

The above two methods are common methods for preparing the polymer powder, but the powder prepared by the two methods has irregular shape and poor fluidity, and the good fluidity is a key of the application of polymer powder. At present, the main methods of improving the fluidity of polymer powder are to reduce the interaction between particle interfaces (e.g., adding a flow aid or coating the polymer particles) and to reduce the rolling resistance (e.g., subjecting polymer to particle shape modification, such as spherical shape). In addition, due to the limited temperature resistance of the polymer, when the use temperature is increased, the fluidity of the powder will be decreased significantly, which limits the application of the powder. In the first method, the mixing process of the flow aid can be performed in any suitable mixing equipment, comprising a fluid bed, and one or more various rotating drums or mixers mounted with rotating shafts.

CN1102954C discloses a preparation method for a granular detergent composition, and the disclosed method comprises a step where a percarbonate salt with an average particle size of 250-900 microns and a powder fluidity aid of partially hydrated crystalline sodium silicoaluminate are added into the granular detergent powder particles.

CN109929242A discloses a nylon polymer powder heat-absorbing material and a preparation method therefor, and the disclosed prepared method comprises the following steps: adding a nylon raw material, a molecular weight regulator and deionized water into a polymerization kettle, and relieving pressure in the kettle to normal pressure, and then adding a heat medium, stirring and performing wiredrawing and cutting material to prepare nylon heat medium pellets; adding the nylon heat medium pellets into a post-polycondensation barrel, raising temperature and stirring at vacuum to prepare nylon heat medium polycondensation pellets; subjecting the nylon heat medium polycondensation pellets to cryogenic grinding process to obtain a nylon heat medium powder material; adding 20 parts of the nylon heat medium powder material and 0.1-2 parts of carbon black into a mixing drum for high-speed stirring to obtain a mixed nylon carbon black powder material; adding the mixed nylon carbon black powder material, a flow aid and 80 parts of the nylon heat medium powder material into the mixing barrel for high-speed stirring and then performing sieving to prepare the nylon polymer powder heat-absorbing material. The disclosed method enables the nylon polymer powder to be used in fiber laser sintering, and the produced objects have good surface quality and mechanical properties.

CN108727814A discloses a composite nylon powder material for selective laser sintering and a preparation method therefor, and the disclosed composite nylon powder material comprises the following components by weight: 30-70 parts of a nylon resin powder; 30-50 parts of a hollow glass microspheres; 0-20 parts of glass fiber; 0.2-2 parts of a coupling agent, 0.1-1.5 parts of a flow aid, 0.2-2 parts of an antioxidant. The modified glass fiber and hollow glass microspheres are added into the disclosed nylon resin powder. Compared with those only added with glass fiber, the nylon composite powder added with both the hollow glass microspheres and glass fiber has better fluidity, and meanwhile, its powder spreading effect is better, and the strength modulus of the sintered parts is higher. The nylon composite material with the hollow glass bead and glass fiber expands the application field of nylon.

At present, the methods of reducing particle interface interaction and reducing rolling resistance bring limited improvement to the fluidity of the polymer. Therefore, it is important to develop a polymer material with excellent fluidity.

### SUMMARY

The following is a summary of the subject described in detail herein. This summary is not intended to limit the protection scope of the claims.

In view of the shortcomings of the prior art, an object of the present application is to provide a polymer composite, a preparation method therefor and an application thereof, and the polymer composite has excellent fluidity, permeability and high-temperature stability.

To achieve the object, the present application adopts the following technical solutions.

In a first aspect, the present application provides a polymer composite, and the polymer composite comprises the following components in parts by weight: 100 parts of a polymer powder, 0.1-3 parts of nanoparticle A and 0.05-1.5 parts of nanoparticle B;
a particle size of the nanoparticle A is smaller than a particle size of the nanoparticle B;
the nanoparticle A and the nanoparticle B have a mass ratio of (1-9): 1, wherein 1-9 can be 1.5, 2, 2.5, 3, 3.5, 4, 4.5, 5, 5.5, 6, 6.5, 7, 7.5, 8, 8.5, etc.

The polymer composite in the present application uses the nanoparticle A and the nanoparticle B with a specific mass ratio as a flow agent, the two work synergistically to coat the surface of the polymer powder, reducing the surface friction of particles and the interaction between particles, and improving the fluidity, permeability and high-temperature stability of the polymer powder.

The nanoparticle A is 0.1-3 parts by weight, such as 0.2 parts, 0.5 parts, 0.8 parts, 1 part, 1.2 parts, 1.4 parts, 1.6 parts, 1.8 parts, 2 parts, 2.2 parts, 2.4 parts, 2.6 parts, 2.8 parts, etc.

The nanoparticle B is 0.05-1.5 parts by weight, such as 0.1 parts, 0.2 parts, 0.3 parts, 0.4 parts, 0.5 parts, 0.6 parts, 0.7 parts, 0.8 parts, 0.9 parts, 1 part, 1.1 parts, 1.2 parts, 1.3 parts, 1.4 parts, etc.

Preferably, the nanoparticle A and the nanoparticle B have a mass ratio of (1.5-4): 1, wherein 1.5-4 can be 2, 2.2, 2.5, 2.8, 3, 3.2, 3.5, 3.8, etc.

The mass ratio of the nanoparticle A to the nanoparticle B in the present application is preferably (1.5-4): 1, and the polymer composite obtained in this mass ratio range has better fluidity and high-temperature stability.

Preferably, the nanoparticle A has a particle size of 5-50 nm, such as 6 nm, 8 nm, 10 nm, 15 nm, 20 nm, 25 nm, 30 nm, 35 nm, 40 nm, 42 nm, 45 nm, 48 nm, etc., preferably 5-30 nm.

The particle size of the nanoparticle A in the present application is preferably 5-30 nm, because the nanoparticles with a small particle size can form a relatively dense coating on the surface of the polymer, thereby reducing the interaction between the particles.

Preferably, the nanoparticle B has a particle size of 50-600 nm, such as 100 nm, 150 nm, 200 nm, 250 nm, 300 nm, 350 nm, 400 nm, 450 nm, 500 nm, 550 nm, etc., preferably 50-300 nm.

The particle size of the nanoparticle B in the present application is preferably 50-300 nm, because the nanoparticles with a large particle size cause rolling friction and barrier on the surface of the polymer to reduce the interaction between the particles.

Preferably, the polymer powder has a median particle size of 5-500 µm, such as 10 µm, 50 µm, 100 µm, 150 µm, 200 µm, 250 µm, 300 µm, 350 µm, 400 µm, 450 µm, etc., preferably 10-300 µm, and more preferably 50-150 µm.

Preferably, the polymer powder comprises a thermoplastic polymer powder and/or a thermosetting polymer powder.

Preferably, the polymer powder comprises a thermoplastic polymer powder.

Preferably, the thermoplastic polymer powder comprises any one or a combination of at least two of a thermoplastic elastomer, polyamide, polyolefin, polymethacrylate, polycarbonate or polystyrene, wherein a typical but non-limiting combination comprises: a combination of a thermoplastic elastomer and polyamide, a combination of polyolefin, polymethacrylate and polycarbonate, a combination of polyamide, polyolefin, polymethacrylate, polycarbonate and polystyrene, etc.

Preferably, the nanoparticle A comprises any one or a combination of at least two of nano-silicon dioxide, nano-titanium dioxide or nano-silicon carbide, wherein a typical but non-limiting combination comprises: a combination of nano-silicon dioxide and nano-titanium dioxide, a combination of nano-titanium dioxide and nano-silicon carbide, a combination of nano-silicon dioxide, nano-titanium dioxide and nano-silicon carbide, etc.

Preferably, the nanoparticle B comprises any one or a combination of at least two of nano-silicon dioxide, nano-titanium dioxide, nano-silicon carbide, nano-aluminum oxide, talc, magnesium stearate or magnesium oxide, wherein a typical but non-limiting combination comprises: a combination of nano-silicon dioxide and nano-titanium dioxide, a combination of nano-titanium dioxide, nano-silicon carbide and nano-aluminum oxide, and a combination of nano-aluminum oxide, talc, magnesium stearate and magnesium oxide.

In a second aspect, the present application provides a preparation method for the polymer composite according to the first aspect, and the preparation method comprises the following steps:
subjecting a polymer powder and nanoparticle A to a first agitation mixing, and then subjecting the mixed raw materials and nanoparticle B to a second agitation mixing, and performing sieving to obtain the polymer composite.

In the process of preparing the polymer composite in the present application, the polymer powder is preferably mixed with the nanoparticle A with a small particle size, which can be better densely coated on the surface of the particle, while the particle size of nanoparticle B is larger, if the polymer powder is first mixed with the nanoparticle B, the coverage of the nanoparticle with a small particle size on the surface of the polymer powder will be affected.

Preferably, the first agitation mixing is performed for a period of 1-15 min, such as 2 min, 3 min, 4 min, 5 min, 6 min, 7 min, 8 min, 9 min, 10 min, 11 min, 12 min, 13 min, 14 min, etc., preferably 1-3 min.

Preferably, the second agitation mixing is performed for a period of 1-6 min, such as 1.5 min, 2 min, 2.5 min, 3 min, 3.5 min, 4 min, 4.5 min, 5 min, 5.5 min, etc., preferably 1-2 min.

The agitation mixing in the present application is continuous agitation mixing; if the mixing time is insufficient, the polymer powder and nanoparticles cannot be evenly mixed; if the mixing time is too long, the nanoparticles will has the problem of loss and embedding, thus losing the effect of nanoparticle composite.

Preferably, the sieving is performed by a screen.

Preferably, the screen has a size of 50-300 mesh, such as 60 mesh, 80 mesh, 100 mesh, 120 mesh, 140 mesh, 160 mesh, 180 mesh, 200 mesh, 220 mesh, 240 mesh, 260 mesh, etc. The screen has a size of 50-300 mesh, and a particle size of particles passing through the screen is 30-500 mesh.

As a preferred technical solution, the preparation method comprises the following steps:
subjecting a polymer powder and nanoparticle A to a first agitation mixing for 1-15 min, and then subjecting the mixed raw materials and nanoparticle B to a second agitation mixing for 1-6 min, and finally performing sieving by a screen with a size of 50-300 mesh to obtain the polymer composite.

In a third aspect, the present application provides an application of the polymer composite according to the first aspect in a powder coating or 3D printing.

Compared with the prior art, the present application has the following beneficial effects.

In the present application, the nanoparticle with a small particle size and nanoparticle with a large particle size are combined at a specific ratio, and the two works synergistically as a flow agent of the polymer powder, so that the polymer composite has excellent fluidity, permeability and high-temperature stability. Taking the case where the polymer powder is thermoplastic polyurethane as an example, the polymer composite has an SE flow energy of less than or equal to 7.75 mJ/g, an FRI of less than or equal to 1.35 and a permeability of more than or equal to 4.11 mbar.

After reading and understanding the detailed description, other aspects can be understood.

### BRIEF DESCRIPTION OF DRAWINGS

FIG. 1 is a scanning electron microscope image of the polymer composite in Example 1;
FIG. 2 is a scanning electron microscope image of the polymer composite in Example 1 after heated at 100°C;
FIG. 3 is a scanning electron microscope image of the polymer composite in Example 2;
FIG. 4 is a scanning electron microscope image of the polymer composite in Example 2 after heated at 135°C;
FIG. 5 is a scanning electron microscope image of the polymer composite in Example 3;
FIG. 6 is a scanning electron microscope image of the polymer composite in Example 4;
FIG. 7 is a scanning electron microscope image of the polymer composite in Example 6;
FIG. 8 is a scanning electron microscope image of the polymer composite in Example 8;
FIG. 9 is a scanning electron microscope image of the polymer composite in Comparative Example 1;
FIG. 10 is a scanning electron microscope image of the polymer composite in Comparative Example 1 after heated at 100°C;
FIG. 11 is a scanning electron microscope image of the polymer composite in Comparative Example 2.

### DETAILED DESCRIPTION

In order to facilitate the understanding of the present application, examples of the present application are described below. Those skilled in the field should understand that the examples are merely used for a better understanding of the present application and should not be regarded as a specific limitation to the present application.

### Example 1

This example provides a polymer composite, and the polymer composite is composed of the following components in parts by weight: 100 parts of a polymer powder, 0.3 parts of nanoparticle A and 0.13 parts of nanoparticle B;
the polymer powder: thermoplastic polyurethane after cryogenic grinding which has a median particle size of 65 µm and a hardness of ShoreA90, and a raw material is purchased from Wanhua Chemical Group Co., Ltd. with a trade name of WHT-1490IV;
nanoparticle A: nano-silicon dioxide with a particle size of 12 nm;
nanoparticle B: nano-silicon dioxide with a particle size of 50 nm.

The preparation method for the polymer composite comprises the following steps:
the polymer powder and nanoparticle A were subjected to a first mixing for 2 min, and the mixed raw materials and nanoparticle B were subjected to a second mixing for 1 min, and finally sieved with a 50-mesh screen to obtain the polymer composite.

### Example 2

This example provides a polymer composite, and the polymer composite is composed of the following components in parts by weight: 100 parts of a polymer powder, 0.5 parts of nanoparticle A and 0.33 parts of nanoparticle B;
the polymer powder: polypropylene after cryogenic grinding which has a median particle size of 50 µm, and a raw material is purchased from Wanhua Chemical Group Co., Ltd. with a trade name of WANFAB GP 1000;
nanoparticle A: nano-silicon carbide with a particle size of 5 nm;
nanoparticle B: nano-aluminum oxide with a particle size of 80 nm.

The preparation method for the polymer composite comprises the following steps:
the polymer powder and nanoparticle A were subjected to a first mixing for 3 min, and the mixed raw materials and nanoparticle B were subjected to a second mixing for 2 min, and finally sieved with a 70-mesh screen to obtain the polymer composite.

### Example 3

This example provides a polymer composite, and the polymer composite is composed of the following components in parts by weight: 100 parts of a polymer powder, 3 parts of nanoparticle A and 0.75 parts of nanoparticle B;
the polymer powder: a phenolic resin after cryogenic grinding which has a median particle size of 5 µm, and a raw material has a trade name of 2123 phenolic resin;
nanoparticle A: nano-titanium dioxide with a particle size of 5 nm;
nanoparticle B: nano-silicon carbide with a particle size of 50 nm.

The preparation method for the polymer composite comprises the following steps:
the polymer powder and nanoparticle A were subjected to a first mixing for 15 min, and the mixed raw materials and nanoparticle B were subjected to a second mixing for 6 min, and finally sieved with a 300-mesh screen to obtain the polymer composite.

### Example 4

This example provides a polymer composite, and the polymer composite is composed of the following components in parts by weight: 100 parts of a polymer powder, 0.2 parts of nanoparticle A and 0.06 parts of nanoparticle B;
the polymer powder: thermoplastic polyurethane after cryogenic grinding which has a median particle size of 500 µm and a hardness of ShoreA90, and a raw material is purchased from Wanhua Chemical Group Co., Ltd. with a trade name of WHT-1490IV;
nanoparticle A: nano-silicon oxide with a particle size of 50 nm;
nanoparticle B: talc with a particle size of 600 nm.

The preparation method for the polymer composite comprises the following steps:
the polymer powder and nanoparticle A were subjected to a first mixing for 1 min, and the mixed raw materials and nanoparticle B were subjected to a second mixing for 1 min, and finally sieved with a 50-mesh screen to obtain the polymer composite.

### Example 5

This example provides a polymer composite, and the polymer composite is composed of the following components in parts by weight: 100 parts of a polymer powder, 0.1 parts of nanoparticle A and 0.05 parts of nanoparticle B;
the polymer powder: thermoplastic polyurethane after cryogenic grinding which has a median particle size of 150 µm and a hardness of ShoreA90, and a raw material is purchased from Wanhua Chemical Group Co., Ltd. with a trade name of WHT-1490IV;
nanoparticle A: nano-titanium dioxide with a particle size of 30 nm;
nanoparticle B: talc with a particle size of 300 nm.

The preparation method for the polymer composite comprises the following steps:
the polymer powder and nanoparticle A were subjected to a first mixing for 1 min, and the mixed raw materials and nanoparticle B were subjected to a second mixing for 2 min, and finally sieved with a 60-mesh screen to obtain the polymer composite.

### Example 6

This example provides a polymer composite, and the polymer composite is composed of the following components in parts by weight: 100 parts of a polymer powder, 2 parts of nanoparticle A and 0.75 parts of nanoparticle B;
the polymer powder: thermoplastic polyurethane after cryogenic grinding which has a median particle size of 10 µm and a hardness of ShoreA90, and a raw material is purchased from Wanhua Chemical Group Co., Ltd. with a trade name of WHT-1490IV;
nanoparticle A: nano-silicon carbide with a particle size of 5 nm;
nanoparticle B: nano-silicon oxide with a particle size of 50 nm.

The preparation method for the polymer composite comprises the following steps:
the polymer powder and nanoparticle A were subjected to a first mixing for 1.5 min, and then the mixed raw materials and nanoparticle B were subjected to a second mixing for 1 min, and finally sieved with a 300-mesh screen to obtain the polymer composite.

### Example 7

This example provides a polymer composite, and the polymer composite is composed of the following components in parts by weight: 100 parts of a polymer powder, 2 parts of nanoparticle A and 0.5 parts of nanoparticle B;
the polymer powder: thermoplastic polyurethane after cryogenic grinding which has a median particle size of 300 µm and a hardness of ShoreA90, and a raw material is purchased from Wanhua Chemical Group Co., Ltd. with a trade name of WHT-1490IV;
nanoparticle A: 1 part of nano-silicon dioxide with a particle size of 35 nm, and 1 part of nano-titanium dioxide with a particle size of 35 nm;
nanoparticle B: 0.25 parts of nano-silicon carbide with a particle size of 150 nm, and 0.25 parts of nano-aluminum oxide with a particle size of 150 nm.

The preparation method for the polymer composite comprises the following steps:
the polymer powder and nanoparticle A were subjected to a first mixing for 2 min, and the mixed raw materials and nanoparticle B were subjected to a second mixing for 2 min, and finally sieved with a 50-mesh screen to obtain the polymer composite.

### Example 8

This example provides a polymer composite, and the polymer composite is composed of the following components in parts by weight: 100 parts of a polymer powder, 1 part of nanoparticle A and 0.3 parts of nanoparticle B;
the polymer powder: polypropylene after cryogenic grinding which has a median particle size of 80 µm, and a raw material is purchased from Wanhua Chemical Group Co., Ltd. with a trade name of WANFAB GP1000;
nanoparticle A: 0.5 parts of nano-silicon dioxide with a particle size of 15 nm, and 0.5 parts of nano-silicon carbide with a particle size of 15 nm;
nanoparticle B: 0.15 parts of nano-silicon carbide with a particle size of 100 nm, and 0.15 parts of nano-silicon dioxide with a particle size of 100 nm.

The preparation method for the polymer composite comprises the following steps:
the polymer powder and nanoparticle A were subjected to a first mixing for 2 min, and the mixed raw materials and nanoparticle B were subjected to a second mixing for 3 min, and finally sieved with a 60-mesh screen to obtain the polymer composite.

### Examples 9-12

Examples 9-12 differ from Example 1 in that the mass ratios of the nanoparticle A to the nanoparticle B are different, and the total mass of the nanoparticle A and the nanoparticle B is 0.6 parts;
in Examples 9-12, the mass ratios of the nanoparticle A to the nanoparticle B are 9: 1 (Example 9), 1: 1 (Example 10), 4: 1 (Example 11) and 1.5: 1 (Example 12), respectively, and the rest are the same as in Example 1.

### Examples 13-16

Examples 13-16 differ from Example 1 in that the particle sizes of the nanoparticle A are 5 nm (Example 13), 50 nm (Example 14), 3 nm (Example 15) and 60 nm (Example 16), respectively, and the rest are the same as in Example 1.

### Examples 17-19

Examples 17-19 differ from Example 1 in that the particle sizes of the nanoparticle B are 600 nm (Example 17), 30 nm (Example 18) and 700 nm (Example 19), respectively, and the rest are the same as in Example 1.

### Comparative Example 1

This comparative example provides a polymer composite, and the polymer composite is composed of the following components in parts by weight: 100 parts of a polymer powder and 0.5 parts of a nanoparticle with a small particle size;
the polymer powder: thermoplastic polyurethane after cryogenic grinding which has a median particle size of 60 µm and a hardness of ShoreA90, and a raw material is purchased from Wanhua Chemical Group Co., Ltd. with a trade name of WHT-1490IV;
the nanoparticle with a small particle size: nano-silicon dioxide with a particle size of 15 nm.

The preparation method for the polymer composite comprises the following steps:
the polymer powder and the nanoparticle with a small particle size were mixed for 2 min, and sieved with a 50-mesh screen to obtain the polymer composite.

### Comparative Example 2

This comparative example provides a polymer composite, and the polymer composite is composed of the following components in parts by weight: 100 parts of a polymer powder and 0.7 parts of a nanoparticle with a large particle size;
the polymer powder: thermoplastic polyurethane after cryogenic grinding which has a median particle size of 80 µm and a hardness of ShoreA90, and a raw material is purchased from Wanhua Chemical Group Co., Ltd. with a trade name of WHT-1490IV;
the nanoparticle with a large particle size: nano-silicon dioxide with a particle size of 100 nm.

The preparation method for the polymer composite comprises the following steps:
the polymer powder and the nanoparticle with a large particle size were mixed for 3 min, and sieved with a 80-mesh screen to obtain the polymer composite.

### Comparative Examples 3-4

Comparative Examples 3-4 differ from Example 1 in that the mass ratios of the nanoparticle A to the nanoparticle B are different, and a total mass of the nanoparticle A and the nanoparticle B is 0.6 parts;
in Comparative Examples 3-4, the mass ratios of the nanoparticle A to the nanoparticle B are 10: 1 and 1: 4, respectively, and the rest are the same as in Example 1.

### Performance Test

The following tests are performed on the polymer composites in Examples 1-19 and Comparative Examples 1-4:
(1) fluidity: the sample was fully dried, and then tested by Freeman FT4 powder rheometer; after the test software was started, the required test method of "stability and variable flow rate" was selected to test the fluidity, and the test results included flow activation energy; an air permeability at 1-15 kPa was tested by "permeability", the test results included the pressure drop at 1-15 kPa, and finally the data was processed;
(2) bulk density: Baxter BT-1000 powder comprehensive characteristic tester was used to test the bulk density; a density container was cleaned and kept dry inside, then the density meter was adjusted to level, a distance between a funnel mouth and the upper edge of the density cup was 40 mm, the powder comprehensive tester was opened, and a 100 m container for loose bulk density was loaded;

100 g of a powder sample was weighed out and poured into the funnel above the tester, and a discharge port of the funnel was blocked;
the discharge port of the funnel was quickly opened, so that the sample in the funnel fell vertically into the density container in a natural state, and the excess sample at the top of the density cup was scraped off with a blade, the density cup was tapped gently to fix the sample, and a mass M1 of the powder in the container was recorded, and the bulk density ρ (g/cm³) = M1/100.

The test was performed for several times to ensure the reproducibility of the results, and the test results are summarized in Table 1.

**Table 1**

| Examples | Thermoplastic polymer powder | SE flow energy (mJ/g) | BFE flow energy (mJ) | FRI | Permeability (mbar) | Bulk density (g/cm³) |
|---|---|---|---|---|---|---|
| Example 1 | Thermoplastic polyurethane | 7.00 | 1290 | 1.25 | 6.64 | 0.53 |
| Example 2 | Polypropylene | 6.80 | 930 | 1.12 | 4.71 | 0.38 |
| Example 3 | Phenolic resin | 4.34 | 833 | 1.01 | 3.15 | 0.50 |
| Example 4 | Thermoplastic polyurethane | 6.55 | 1011 | 1.10 | 4.11 | 0.58 |
| Example 5 | Thermoplastic polyurethane | 7.40 | 1595 | 1.31 | 6.31 | 0.55 |
| Example 6 | Thermoplastic polyurethane | 7.50 | 912 | 1.21 | 7.81 | 0.42 |
| Example 7 | Thermoplastic polyurethane | 6.91 | 1124 | 1.28 | 5.31 | 0.55 |
| Example 8 | Polypropylene | 6.41 | 977 | 1.15 | 4.88 | 0.41 |
| Example 9 | Thermoplastic polyurethane | 7.48 | 1087 | 1.34 | 5.64 | 0.47 |
| Example 10 | Thermoplastic polyurethane | 7.67 | 1136 | 1.35 | 5.40 | 0.46 |
| Example 11 | Thermoplastic polyurethane | 6.81 | 1377 | 1.30 | 6.11 | 0.51 |
| Example 12 | Thermoplastic | 6.95 | 1449 | 1.32 | 5.93 | 0.50 |
| | polyurethane | | | | | |
| Example 13 | Thermoplastic polyurethane | 7.21 | 1422 | 1.22 | 6.81 | 0.54 |
| Example 14 | Thermoplastic polyurethane | 7.33 | 1338 | 1.27 | 6.13 | 0.52 |
| Example 15 | Thermoplastic polyurethane | 7.66 | 1466 | 1.28 | 5.89 | 0.51 |
| Example 16 | Thermoplastic polyurethane | 7.75 | 1523 | 1.29 | 5.77 | 0.51 |
| Example 17 | Thermoplastic polyurethane | 6.82 | 1328 | 1.21 | 6.94 | 0.55 |
| Example 18 | Thermoplastic polyurethane | 7.33 | 1520 | 1.27 | 6.82 | 0.54 |
| Example 19 | Thermoplastic polyurethane | 7.45 | 1479 | 1.26 | 5.53 | 0.52 |
| Comparative Example 1 | Thermoplastic polyurethane | 8.70 | 899 | 1.41 | 3.51 | 0.45 |
| Comparative Example 2 | Thermoplastic polyurethane | 8.30 | 1626 | 1.49 | 3.83 | 0.51 |
| Comparative Example 3 | Thermoplastic polyurethane | 7.91 | 1589 | 1.38 | 4.63 | 0.48 |
| Comparative Example 4 | Thermoplastic polyurethane | 8.81 | 1442 | 1.41 | 4.31 | 0.47 |

Through the analysis of the data in Table 1, it can be seen that taking the case where the polymer powder is thermoplastic polyurethane as an example, the polymer composite has the SE flow energy of less than or equal to 7.75 mJ/g, the FRI of less than or equal to 1.35 and the permeability of more than or equal to 4.11 mbar. In the polymer composite in the present application, the nanoparticle with a small particle size and the nanoparticle with a large particle size which works synergistically are used as a flow agent for the polymer powder, and the polymer composite formed by mixing the three materials has low FRI flow energy and SE flow energy, the indicators to suggest cohesion characteristics, indicating that the combined use of the nanoparticle with a small particle size and the nanoparticle with a large particle size reduces the flow resistance of the polymer powder; moreover, the pressure drop (air permeability) of the polymer composite is obviously high, indicating that the powder is packed more tightly and the gaps between the particles are fewer, which is consistent with the results of the bulk density; the BFE flow energy comprehensively reflects the bulk density and powder cohesion characteristic, and for the powder with high bulk density and large cohesion characteristic, a higher energy is required by paddles of the powder rheometer to push, and the BFE also tends to increase. Therefore, the polymer composite in the present application has excellent fluidity and permeability.

Through the analysis of Comparative Examples 1-2 and Example 1, it can be seen that the bulk density in Comparative Example 2 is relatively large due to the selection of the powder with a large particle size, but the sensitivity of the bulk density to fluidity is inferior to the influence on the particle size, so that it can be inferred that the performance in Comparative Examples 1-2 is still inferior to that of Example 1, which proves that the nanoparticle A and nanoparticle B which work synergistically can be used as a flow agent for the polymer powder to form a polymer composite with excellent fluidity and high-temperature stability.

Through the analysis of Comparative Examples 3-4 and Examples 9-10, it can be seen that the performance in Comparative Examples 3-4 is inferior than that of Examples 9-10, and it is proved that the performance of the obtained polymer composite is better when the mass ratio of the nanoparticle A to the nanoparticle B is in the range of (1-9): 1.

Through the analysis of Examples 9-12, it can be seen that the performance in Examples 9-10 is inferior than that of Examples 11-12, and it is proved that the performance of the obtained polymer composite is better when the mass ratio of the nanoparticle A to the nanoparticle B is preferably (1.5-4): 1.

Through the analysis of Examples 13-16, it can be seen that the performance in Examples 15-16 is inferior than that of Examples 13-14, and it is proved that when the particle size of the nanoparticle A is in the range of 5-50 nm, the nanoparticle A can better synergize with the nanoparticle B to improve the performance of the polymer composite.

Through the analysis of Examples 17-19 and Example 1, it can be seen that the performance in Examples 18-19 is inferior than that of Examples 1 and 17, and it is proved that when the particle size of the nanoparticle B is in the range of 50-600 nm, the nanoparticle B can better synergize with the nanoparticle A to improve the performance of the polymer composite.

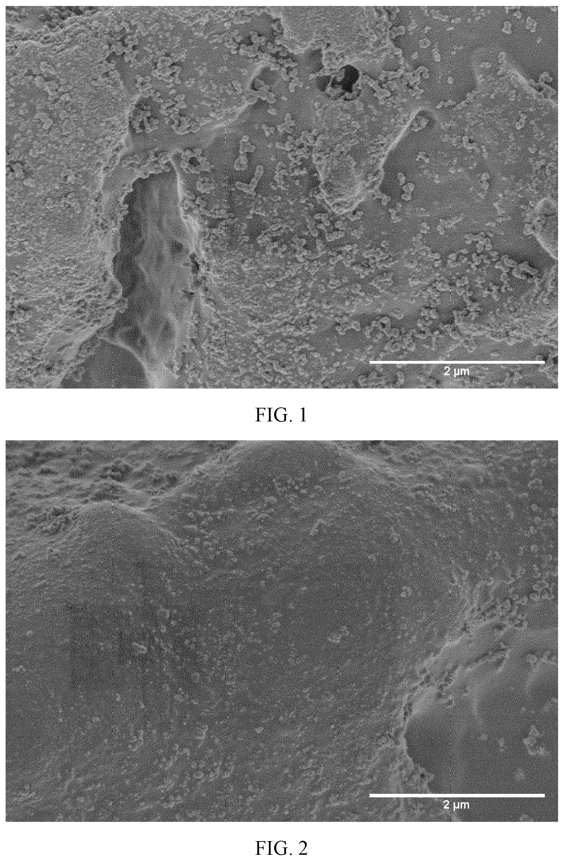

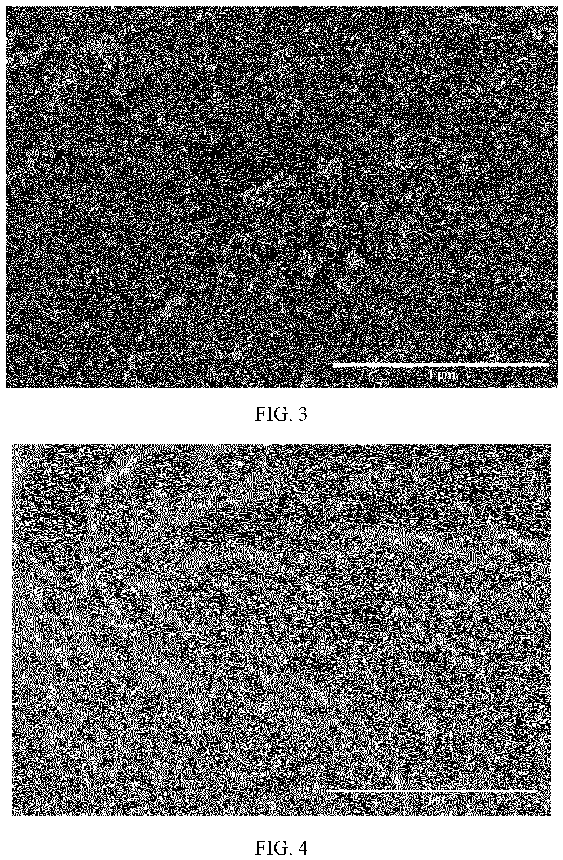

By comparing FIG. 1 and FIG. 2, it can be seen that in FIG. 1, the nanoparticle B and nanoparticle A are uniformly distributed on the polymer powder matrix; in FIG. 2, after heated at 100°C, the nanoparticle B and nanoparticle A are still uniformly distributed on the polymer powder matrix without loss and embedding, and it is proved that the polymer composite in the present application has excellent high-temperature stability. Similar results can be obtained by comparing FIG. 3 and FIG. 4.

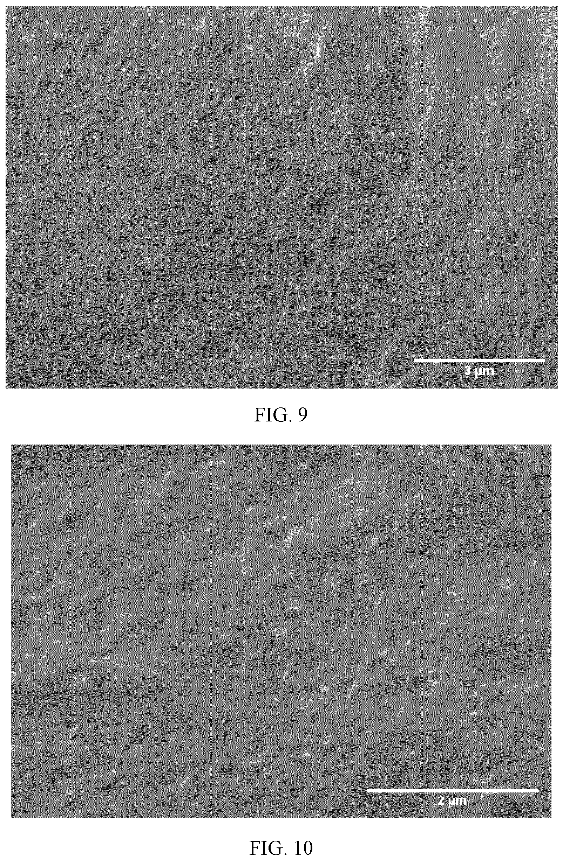

By comparing FIG. 9 and FIG. 10, it can be seen that in FIG. 9, a single type of nanoparticle is uniformly distributed on the polymer powder matrix; however, after being heated, the nanoparticle in FIG. 10 shows obvious embedding and loss, affecting the heat resistance and high-temperature fluidity of the polymer composite.

Therefore, the nanoparticle A and nanoparticle B are combined with a specific ratio for using, and mixed with the polymer powder to form the polymer composite with excellent fluidity and high-temperature thermal stability.

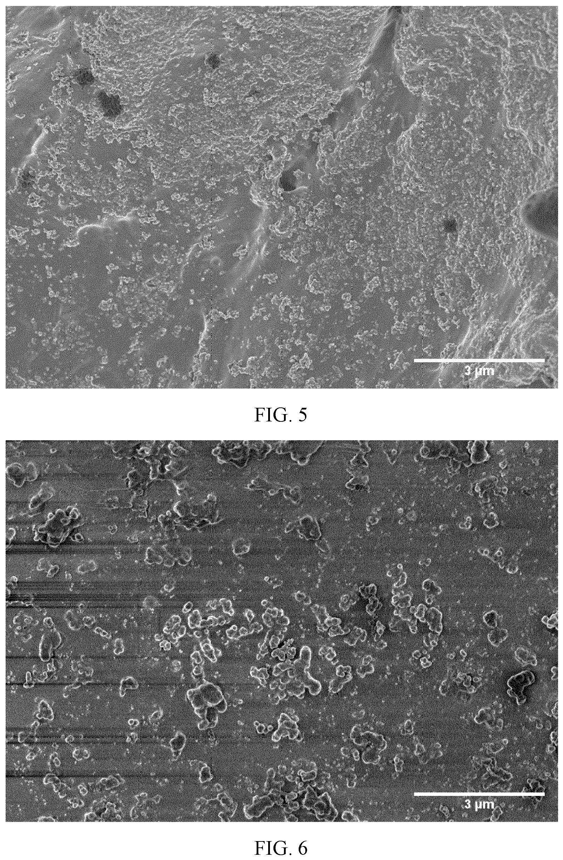

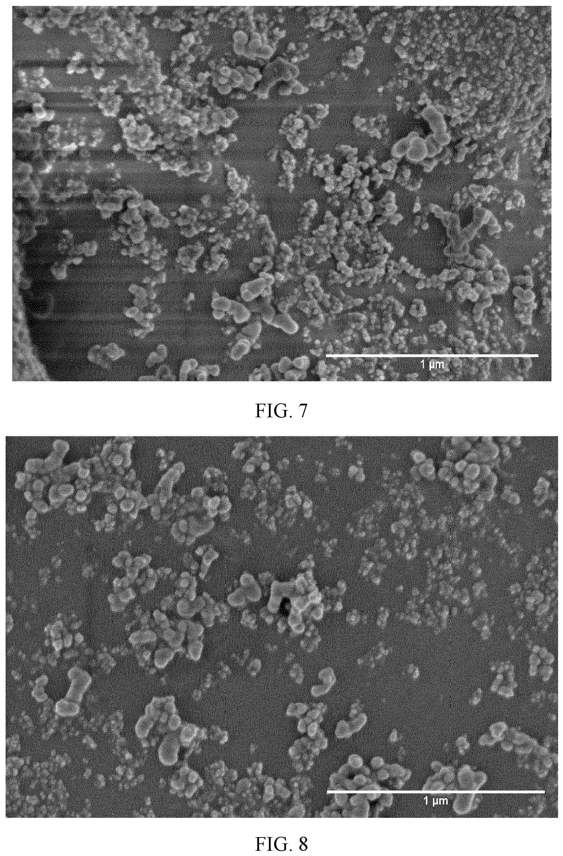

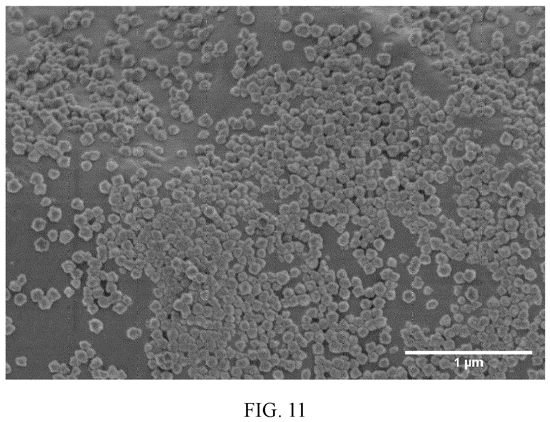

Through the analysis of FIG. 5-8, it can be seen that by appropriately adjusting the particle size and type of the nanoparticle A, nanoparticle B and polymer powder, the obtained polymer composite has excellent fluidity and high-temperature thermal stability. It can be inferred from the results of Examples 1-2 and Comparative Example 1 that Examples 3-4, 6, and 8 also have the similar results, although the scanning electron microscope images after high-temperature heating are not provided in the present application, and the results of Examples 3-4, 6, and 8 can also prove that the polymer composite obtained by combining the nanoparticle A and nanoparticle B in a specific ratio and mixing them with the polymer powder has excellent fluidity and high-temperature thermal stability; although the nanoparticles in FIG. 11 are uniformly distributed, it can be predicted that the results are similar as in Comparative Example 1, that is, the nanoparticle with a single particle size has a limited improvement on the performance of the polymer powder, especially the high-temperature stability and fluidity.

## Claims

1. A polymer composite, comprising the following components in parts by weight: 100 parts of a polymer powder, 0.1-3 parts of nanoparticle A and 0.05-1.5 parts of nanoparticle B;
wherein a particle size of the nanoparticle A is smaller than a particle size of the nanoparticle B;
the nanoparticle A and the nanoparticle B have a mass ratio of (1-9): 1.

2. The polymer composite according to claim 1, wherein the nanoparticle A and the nanoparticle B have a mass ratio of (1.5-4): 1.

3. The polymer composite according to claim 1 or 2, wherein the particle size of the nanoparticle A is 5-50 nm.

4. The polymer composite according to claim 1 or 2, wherein the particle size of the nanoparticle B is 50-600 nm.

5. The polymer composite according to any one of claims 1-4, wherein the polymer powder has a median particle size of 5-500 µm.

6. The polymer composite according to any one of claims 1-5, wherein the polymer powder comprises a thermoplastic polymer powder and/or a thermosetting polymer powder;
preferably, the polymer powder comprises a thermoplastic polymer powder;
preferably, the thermoplastic polymer powder comprises any one or a combination of at least two of a thermoplastic elastomer, polyamide, polyolefin, polymethacrylate, polycarbonate or polystyrene;
preferably, the nanoparticle A comprises any one or a combination of at least two of nano-silicon dioxide, nano-titanium dioxide or nano-silicon carbide;
preferably, the nanoparticle B comprises any one or a combination of at least two of nano-silicon dioxide, nano-titanium dioxide, nano-silicon carbide, nano-aluminum oxide, talc, magnesium stearate or magnesium oxide.

7. A preparation method for the polymer composite according to any one of claims 1-6, comprising the following steps:
subjecting a polymer powder and nanoparticle A to a first agitation mixing, then subjecting the mixed raw materials and nanoparticle B to a second agitation mixing, and performing sieving to obtain the polymer composite.

8. The preparation method according to claim 7, wherein the first agitation mixing is performed for a period of 1-15 min;
preferably, the second agitation mixing is performed for a period of 1-6 min.

9. The preparation method according to claim 7 or 8, wherein the sieving is performed by a screen;
preferably, the screen has a size of 50-300 mesh.

10. The preparation method according to any one of claims 7-9, wherein the preparation method comprises the following steps:
subjecting a polymer powder and nanoparticle A to a first agitation mixing for 1-15 min, and then subjecting the mixed raw materials and nanoparticle B to a second agitation mixing for 1-6 min, and finally performing sieving by a screen with a size of 50-300 mesh to obtain the polymer composite.

11. An application of the polymer composite according to any one of claims 1-6, wherein the polymer composite is used in a powder coating or 3D printing.
